# EUROPEAN PATENT APPLICATION

(11) **EP 3 926 812 A1**
(43) Date of publication of application: **22.12.2021**
(21) Application number: 19915392.5
(22) Date of filing: 12.02.2019
(51) Int. Cl.: H02M 7/49, H02J 3/36, H02M 7/797

(54) **POWER CONVERSION DEVICE AND POWER CONVERSION SYSTEM**

(71) Applicant: MITSUBISHI ELECTRIC CORPORATION, Chiyoda-ku Tokyo 100-8310 (JP)
(72) Inventor: TAKAHASHI, Tatsuya, Tokyo 100-8310 (JP); HAYASHI, Shigeo, Tokyo 100-8310 (JP)
(74) Representative: Witte, Weller & Partner Patentanwälte mbB
(86) International application number: PCT/JP2019/004884
(87) International publication number: WO 2020/165954

(57) **Abstract**

A power converter (100) that performs power conversion between a DC line (14) and an AC system (80) includes a power conversion circuit (2) including a plurality of submodules (7) connected in series with each other, and a controller (50) to control each of the plurality of submodules (7). Each submodule (7) includes a switching circuit (20) and a capacitor (24) connected in parallel with the switching circuit (20). When a circuit breaker (12) provided between the AC system (80) and the power conversion circuit (2) is opened, the controller (50) drives the switching circuit (20) of at least one submodule (7) of the plurality of submodules (7) such that the capacitor (24) of the at least one submodule (7) is discharged via a discharge circuit (30) connected to the DC line (14).

## Description

### TECHNICAL FIELD

The present disclosure relates to a power converter and a power conversion system that perform power conversion between alternating current (AC) and direct current (DC).

### BACKGROUND ART

As a power converter for electrical power system such as a high voltage direct current (HVDC) or a static synchronous compensator (STATCOM), a modular multilevel converter (MMC) with an internal high-capacity capacitor is known. The MMC converter includes an upper arm connected to a high-potential-side DC terminal and a lower arm connected to a lower-potential-side DC terminal for each phase of AC. Each arm is composed of multiple cascaded submodules. "Submodule" is also referred to as a "converter cell".

When an operation of the power converter is stopped in maintenance service or the like, electric charges stored in the capacitor of each submodule are gradually discharged. An electronic circuit of the above-mentioned power converter is, however, designed to have the smallest possible loss, and accordingly, the voltage of the capacitor decreases at a lower rate due to the discharge. It thus takes a long time before a person can approach the power converter.

For example, Japanese Patent Publication No. 2016-518804 (PTL 1) discloses a power converter. A converter cell of this power converter includes a circuit including a discharge resistor and a discharge switch connected in series with each other, and an energy storage element connected in parallel with this circuit. The discharge switch is used when the energy storage element needs to be discharged for maintenance or repair.

### CITATION LIST

### PATENT LITERATURE

PTL 1: Japanese National Patent Publication No. 2016-518804

### SUMMARY OF INVENTION

### TECHNICAL PROBLEM

When a capacitor is discharged in each converter cell as described in PTL 1, each converter cell needs to be newly provided with a discharge mechanism including a discharge resistor having a resistance value optimized for discharge and a discharge switch connected in series with the discharge resistor, and in this respect, there is conceivably a room for improvement.

An object in an aspect of the present disclosure is to provide a power converter and a power conversion system that are able to efficiently discharge a capacitor of each submodule by making the most of an existing facility.

### SOLUTION TO PROBLEM

According to an embodiment, a power converter that performs power conversion between a DC line and an AC system is provided. The power converter includes a power conversion circuit including a plurality of submodules connected in series with each other, and a controller to control each of the plurality of submodules. Each submodule includes a switching circuit and a capacitor connected in parallel with the switching circuit. When a circuit breaker provided between the AC system and the power conversion circuit is opened, the controller drives the switching circuit of at least one submodule of the plurality of submodules such that the capacitor of the at least one submodule is discharged via a discharge circuit connected to the DC line.

According to another embodiment, a power conversion system that performs power conversion between a DC line and an AC system is provided. The power conversion system includes a power converter and a discharge circuit connected to the DC line. The power converter includes a power conversion circuit including a plurality of submodules connected in series with each other, and a controller to control each of the plurality of submodules. Each submodule includes a switching circuit and a capacitor connected in parallel with the switching circuit. When a circuit breaker provided between the AC system and the power conversion circuit is opened, the controller drives the switching circuit of at least one submodule of the plurality of submodules such that the capacitor of the at least one submodule is discharged via the discharge circuit connected to the DC line.

### ADVANTAGEOUS EFFECTS OF INVENTION

With the present disclosure, the capacitor of each submodule can be discharged efficiently by making the most of an existing facility.

### BRIEF DESCRIPTION OF DRAWINGS

Fig. 1 shows an example schematic configuration of a power conversion system according to Embodiment 1.
Fig. 2 shows a schematic configuration of a power conversion circuit according to Embodiment 1.
Fig. 3 is a circuit diagram showing an example submodule of each leg circuit of Fig. 2.
Fig. 4 shows an example hardware configuration of a controller according to Embodiment 1.
Fig. 5 is a diagram for illustrating a discharge path of a capacitor according to Embodiment 1.
Fig. 6 is a diagram for illustrating an example procedure of the controller according to Embodiment 1.
Fig. 7 is a schematic diagram showing a functional configuration of the controller according to Embodiment 1.
Fig. 8 is a circuit diagram showing an example submodule according to Embodiment 2.
Fig. 9 is a diagram for illustrating a discharge path of a capacitor according to Embodiment 2.
Fig. 10 is a diagram for illustrating an example procedure of a controller according to Embodiment 2.

### DESCRIPTION OF EMBODIMENTS

Embodiments of the present disclosure will be described below with reference to the drawings. In the description below, identical parts will be designated by the same reference numerals. Since their names and functions are also the same, the detailed description thereof will not be repeated.

Embodiment 1

### <Configuration of System>

### Overall Configuration

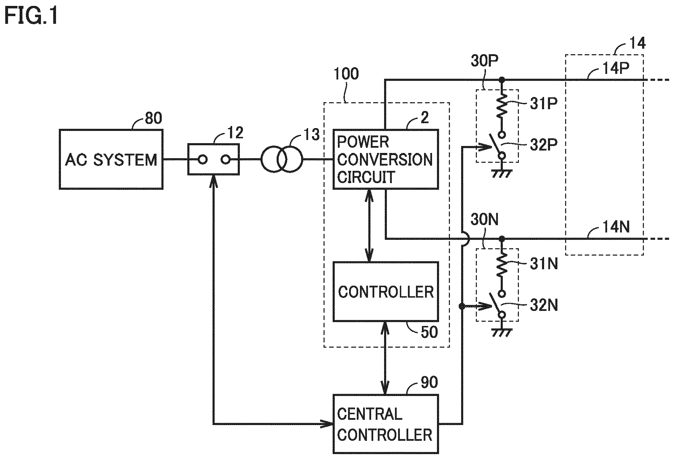

Fig. 1 shows an example schematic configuration of a power conversion system according to Embodiment 1. Referring to Fig. 1, the power conversion system is a system for controlling electric power of a DC power transmission system of single pole configuration. Electric power is transmitted and received between an AC system 80 and another AC system through a positive-side DC power transmission line 14P and a negative-side DC power transmission line 14N of a DC line 14. DC line 14 is typically a cable having a capacitance.

Power converter 100 performs power conversion between DC line 14 and AC system 80. Specifically, power converter 100 includes a power conversion circuit 2 and a controller 50. Power conversion circuit 2 is connected to DC power transmission lines 14P, 14N. Controller 50 controls an operation of power conversion circuit 2. Specific processes performed by controller 50 will be described below. Power conversion circuit 2 is connected to AC system 80 via transformer 13 and AC circuit breaker 12.

AC circuit breaker 12 is provided between AC system 80 and power conversion circuit 2. Transformer 13 is, for example, a tapped transformer that switches among multiple taps provided in a primary winding and adjusts a voltage by manipulating a voltage transformation ratio.

Discharge circuits 30P, 30N are respectively provided for discharging electric charges stored in DC power transmission lines 14P, 14N. Discharge circuits 30P, 30N (hereinbelow, also collectively referred to as "discharge circuit 30") are respectively connected to DC power transmission lines 14P, 14N.

Discharge circuit 30P includes a discharge resistor 31P and a discharge switch 32P connected in series. Discharge resistor 31P has first and second ends respectively connected to DC power transmission line 14P and discharge switch 32P. Discharge switch 32P has first and second ends respectively connected to discharge resistor 31P and ground.

Discharge circuit 30N includes a discharge resistor 31N and a discharge switch 32N connected in series. Discharge resistor 31N has first and second ends respectively connected to DC power transmission line 14N and discharge switch 32N. Discharge switch 32N has first and second ends respectively connected to discharge resistor 31N and ground. Hereinbelow, discharge resistors 31P, 31N are also collectively referred to as "discharge resistor 31", and discharge switches 32P, 32N are also collectively referred to as "discharge switch 32".

Although the present embodiment describes a configuration in which discharge switch 32 is grounded in discharge circuit 30, discharge resistor 31 may be grounded in any other configuration.

A central controller 90 corresponds to a higher-level device of controller 50. Central controller 90 is configured so as to communicate with controller 50 and provides controller 50 with an instruction. Central controller 90 also controls, for example, AC circuit breaker 12 to open and close and discharge switch 32 to open and close.

### Configuration of Power Conversion Circuit

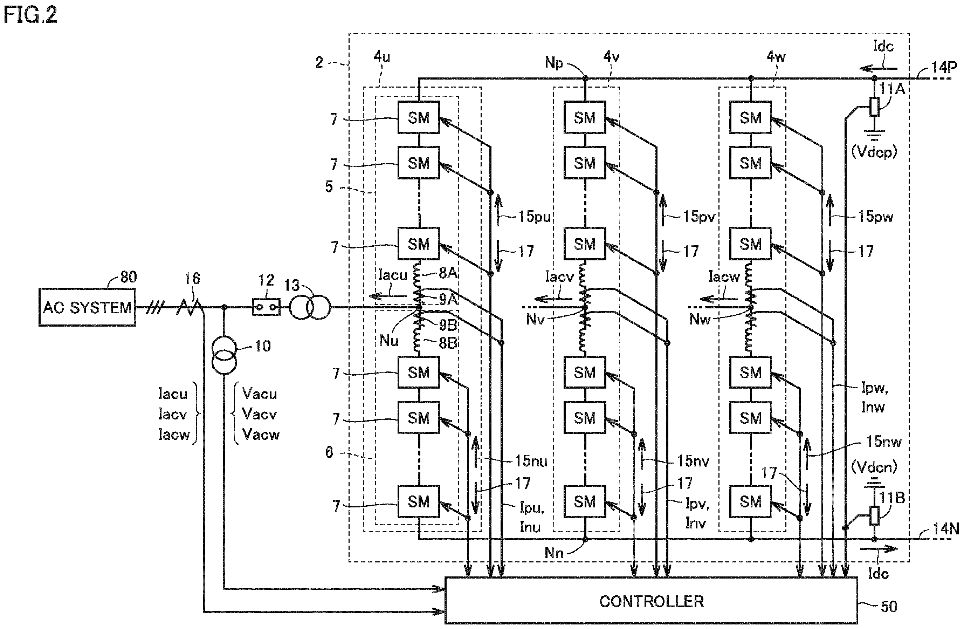

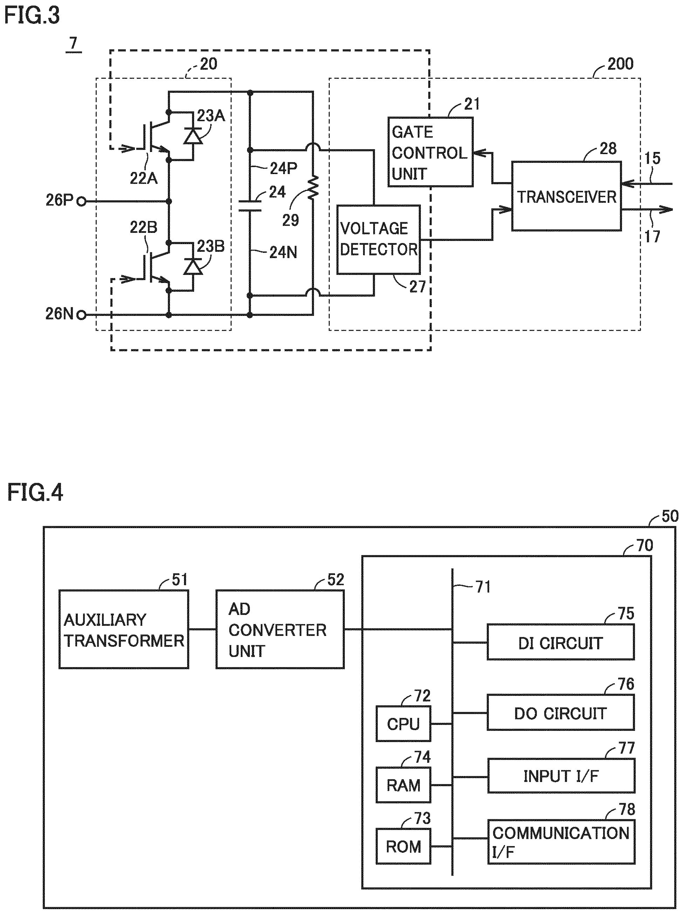

Fig. 2 shows a schematic configuration of the power conversion circuit according to Embodiment 1. Referring to Fig. 2, power conversion circuit 2 is formed of a self-excited voltage source power converter. Specifically, power conversion circuit 2 is formed of a modular multilevel converter including multiple submodules (corresponding to "SM" in Fig. 3) 7 connected in series with each other. Power conversion circuit 2 performs power conversion between DC line 14 and AC system 80.

Power conversion circuit 2 includes multiple leg circuits 4u, 4v, 4w connected in parallel with each other between a positive DC terminal (i.e., high-potential-side DC terminal) Np and a negative DC terminal (i.e., low-potential-side DC terminal) Nn. When any one of leg circuits 4u, 4v, 4w is mentioned, it is also referred to as leg circuit 4.

Leg circuit 4 is provided for each of multiples phases of AC. Leg circuit 4 is connected between AC system 80 and DC line 14 for performing power conversion.

Fig. 2 shows a case where AC system 80 is a three-phase AC system, in which three leg circuits 4u, 4v, 4w are provided respectively for U phase, V phase, and W phase.

AC input terminals Nu, Nv, Nw provided respectively in leg circuits 4u, 4v, 4w are connected to AC system 80 via transformer 13 and AC circuit breaker 12. For the sake of simplicity of illustration, Fig. 2 does not show connections between AC input terminals Nv, Nw and transformer 13. High-potential-side DC terminal Np and low-potential-side DC terminal Nn connected in common to each leg circuit 4 are respectively connected to DC power transmission lines 14P and 14N.

Primary windings may be provided respectively for leg circuits 4u, 4v, 4w in place of AC input terminals Nu, Nv, Nw to allow for AC connection of leg circuits 4u, 4v, 4w to transformer 13 via secondary windings magnetically coupled with the primary windings. In this case, the primary windings may be reactors 8A, 8B, which will be described below. In other words, leg circuit 4 is electrically connected (i.e., DC or AC connection) with AC system 80 via connecting parts provided in respective leg circuits 4u, 4v, 4w, such as AC input terminals Nu, Nv, Nw or the primary windings described above.

Leg circuit 4u includes an upper arm 5 from high-potential-side DC terminal Np to AC input terminal Nu and a lower arm 6 from low-potential-side DC terminal Nn to AC input terminal Nu. An AC input terminal Nu, which is a connecting point between upper arm 5 and lower arm 6, is connected to transformer 13. High-potential-side DC terminal Np and low-potential-side DC terminal Nn are respectively connected to DC power transmission lines 14P and 14N. Leg circuits 4v, 4w have a configuration similar to the above configuration, and accordingly, leg circuit 4u will be representatively described below.

Upper arm 5 includes multiple cascaded submodules 7 and a reactor 8A. Submodules 7 and reactor 8A are connected in series with each other.

Similarly, lower arm 6 includes multiple cascaded submodules 7 and a reactor 8B. Submodules 7 and reactor 8B are connected in series with each other.

The position at which reactor 8A is inserted may be any position in upper arm 5 of leg circuit 4u, and the position at which reactor 8B is inserted may be any position in lower arm 6 of leg circuit 4u. Multiple reactors 8A and multiple reactors 8B may be provided. The reactors may have different inductance values. Moreover, only reactor 8A of upper arm 5 or only reactor 8B of lower arm 6 may be provided.

Reactors 8A, 8B are provided for preventing a sharp increase of fault current in the event of a fault in AC system 80, DC line 14, or the like. However, an excessively large inductance values of reactors 8A, 8B may decrease the efficiency of the power converter. It is thus preferable that in the event of a fault, all the switching elements of respective submodules 7 be stopped (i.e., turned off) as quickly as possible.

Controller 50 obtains an amount of electricity (e.g., current, voltage) to be used for control from multiple detectors. Specifically, the multiple detectors include an AC voltage detector 10, an AC current detector 16, DC voltage detectors 11A, 11B, and arm current detectors 9A, 9B provided in respective leg circuits 4.

Signals detected by the respective detectors are input to controller 50. Based on the detected signals, controller 50 outputs operation commands 15pu, 15nu, 15pv, 15nv, 15pw, 15nw for controlling the operating states of the respective submodules. Controller 50 also receives, from each submodule, a signal 17 indicating a detected value of the voltage of the capacitor provided in the submodule.

In the case of the present embodiment, operation commands 15pu, 15nu, 15pv, 15nv, 15pw, 15nw are generated respectively for a U-phase upper arm, a U-phase lower arm, a V-phase upper arm, a V-phase lower arm, a W-phase upper arm, and a W-phase lower arm. In the description below, when operation commands 15pu, 15nu, 15pv, 15nv, 15pw, 15nw are mentioned collectively or any one of them is mentioned, it is referred to as operation command 15.

For the sake of simplicity of illustration, Fig. 2 collectively shows some signal lines for signals input to controller 50 from the respective detectors and signal lines for signals input and output between controller 50 and the respective submodules 7. The signal line is, however, provided for each detector and for each submodule 7 in actuality. The signal line between each submodule 7 and controller 50 may be provided individually for transmission and for reception. For example, these signals may be transmitted through optical fibers for noise immunity.

Each detector will now be described specifically. AC voltage detector 10 detects a U-phase AC voltage value Vacu, a V-phase AC voltage value Vacv, and a W-phase AC voltage value Vacw output from transformer 13 to AC system 80. AC current detector 16 detects a U-phase AC current value Iacu, a V-phase AC current value Iacv, and a W-phase AC current value Iacw output from transformer 13 to AC system 80. DC voltage detector 11A detects a DC voltage value Vdcp of high-potential-side DC terminal Np connected to DC power transmission line 14P. DC voltage detector 11B detects a DC voltage value Vdcn of low-potential-side DC terminal Nn connected to DC power transmission line 14N.

Arm current detectors 9A and 9B provided in leg circuit 4u for U phase respectively detect an upper arm current Ipu flowing through upper arm 5 and a lower arm current Inu flowing through lower arm 6. Similarly, arm current detectors 9A and 9B provided in leg circuit 4v for V phase respectively detect an upper arm current Ipv and a lower arm current Inv. Arm current detectors 9A and 9B provided in leg circuit 4w for W phase respectively detect an upper arm current Ipw and a lower arm current Inw.

### Example Configuration of Submodule

Fig. 3 is a circuit diagram showing an example submodule of each leg circuit in Fig. 2. Submodule 7 shown in Fig. 3 includes a half-bridge switching circuit 20, a capacitor 24 serving as an energy storage device, a resistor 29, and a control circuit 200.

Half-bridge switching circuit 20 includes switching elements 22A, 22B connected in series with each other and diodes 23A, 23B.

Diodes 23A, 23B are respectively connected in anti-parallel with (i.e., in the reverse bias direction and in parallel with) switching elements 22A, 22B. Capacitor 24 is connected in parallel with switching circuit 20. More specifically, capacitor 24 is connected in parallel with a series-connected circuit of switching elements 22A, 22B for holding DC voltage.

A connection node between switching elements 22A, 22B is connected to a high-potential-side input-output terminal 26P. A connection node between switching element 22B and capacitor 24 is connected to a low-potential-side input-output terminal 26N. As described below in detail, resistor 29 is a resistor for self-discharge of electric charges remaining in capacitor 24 once submodule 7 and controller 50 are unable to communicate with each other, and is connected in parallel with capacitor 24. Note that a loss during normal operation of submodule 7 needs to be reduced as much as possible, and accordingly, the resistance value of resistor 29 is set high.

Each switching element 22A, 22B may be a self-arc-extinguishing-type switching element that can control both of ON operation and OFF operation. Switching element 22A, 22B is, for example, an insulated gate bipolar transistor (IGBT).

Control circuit 200 includes a gate control unit 21, a voltage detector 27, and a transceiver 28. Note that control circuit 200 includes a power circuit that uses the voltage of capacitor 24 to generate power for control.

Gate control unit 21 operates in accordance with operation command 15 received from controller 50. During normal operation (i.e., when zero voltage or positive voltage is output to between input-output terminals 26P, 26N), gate control unit 21 controls switching elements 22A, 22B such that one switching element enters ON state and the other switching element enters OFF state.

When switching element 22A is in ON state and switching element 22B is in OFF state, the voltage (hereinbelow also referred to as "cell capacitor voltage") between opposite ends 24P, 24N of capacitor 24 is applied to between input-output terminals 26P, 26N. In other words, the voltage output from submodule 7 is the cell capacitor voltage. Conversely, when switching element 22A is in OFF state and switching element 22B is in ON state, the voltage between input-output terminals 26P, 26N is 0 V. In other words, the voltage output from submodule 7 is zero voltage.

As described above, submodule 7 shown in Fig. 3 can alternately bring switching elements 22A, 22B to ON state, thereby outputting zero voltage or a positive voltage (i.e., cell capacitor voltage) dependent on the voltage of capacitor 24. Diode 23A, 23B is provided for protection at application of a reverse voltage to switching element 22A, 22B.

Upon detection of an overcurrent of an arm current, controller 50 transmits a gate block (i.e., turn-off of the switching element) command to transceiver 28. Upon receipt of the gate block command via transceiver 28, gate control unit 21 turns off both of switching elements 22A, 22B for protecting the circuit. As a result, for example, switching elements 22A, 22B can be protected in the event of a grounding fault of AC system 80.

Voltage detector 27 detects a voltage (i.e., cell capacitor voltage) of capacitor 24. Transceiver 28 transmits operation command 15 received from controller 50 to gate control unit 21 and also sends signal 17 indicating the cell capacitor voltage detected by voltage detector 27 to controller 50.

Gate control unit 21, voltage detector 27, and transceiver 28 described above may be configured by a dedicated circuit or may be configured using a field programmable gate array (FPGA).

### <Hardware Configuration of Controller>

Fig. 4 shows an example hardware configuration of controller 50 according to Embodiment 1. Referring to Fig. 4, controller 50 includes an auxiliary transformer 51, an analog to digital (AD) converter unit 52, and an arithmetic processing unit 70.

Auxiliary transformer 51 captures an amount of electricity from each detector, converts the amount of electricity into a voltage signal suitable for signal processing in an internal circuit, and then outputs the voltage signal. AD converter unit 52 captures the voltage signal output from auxiliary transformer 51 and converts the voltage signal into digital data. Specifically, AD converter unit 52 includes an analog filter, a sample-and-hold circuit, a multiplexer, and an AD converter.

The analog filter removes a high-frequency noise component from the voltage signal output from auxiliary transformer 51. The sample-and-hold circuit samples signals output from the analog filter, at predetermined sampling cycles. The multiplexer sequentially switches signals input from the sample-and-hold circuit in chronological order based on timing signals input from arithmetic processing unit 70 and outputs the signals to the AD converter. The AD converter converts the signal input from the multiplexer from analog data into digital data. The AD converter outputs the digitally converted signal (i.e., digital data) to arithmetic processing unit 70.

Arithmetic processing unit 70 includes a central processing unit (CPU) 72, a ROM 73, a RAM 74, a digital input (DI) circuit 75, a digital output (DO) circuit 76, an input interface (I/F) 77, and a communication interface (I/F) 78. These are coupled by a bus 71.

CPU 72 reads and executes programs pre-stored in ROM 73, thereby controlling the operation of controller 50. Note that ROM 73 stores various pieces of information used by CPU 72. CPU 72 is, for example, a microprocessor. Note that the hardware may be a field programmable gate array (FPGA), an application specific integrated circuit (ASIC), and any other circuit that has arithmetic functions, other than a CPU.

CPU 72 captures digital data from AD converter unit 52 via bus 71. CPU 72 performs a control operation using the captured digital data, based on the program stored in ROM 73.

CPU 72 externally outputs a control command via DO circuit 76 based on a result of the control operation. CPU 72 also receives a response to the control command via DI circuit 75. Input interface 77 typically includes various buttons or the like, and receives various setting operations from a system operator. CPU 72 also transmits and receives various pieces of information to and from any other device (such as central controller 90) via communication interface 78.

The hardware configuration of central controller 90 may be similar to, for example, the hardware configuration of controller 50. Controller 50 and central controller 90 are typically configured as digital protection controllers.

### <Discharge of Capacitor>

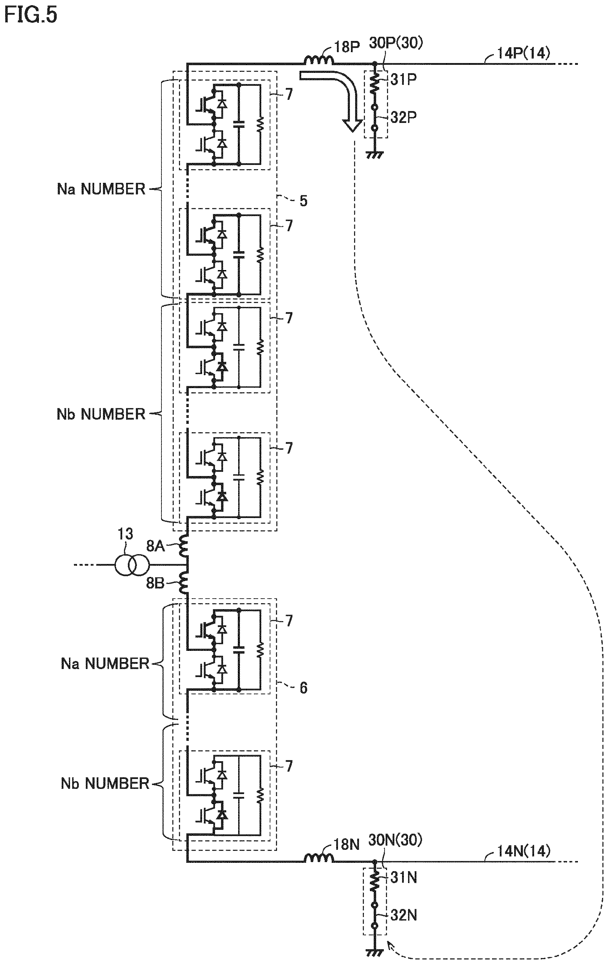

Fig. 5 is a diagram for illustrating a discharge path of capacitor 24 according to Embodiment 1. Herein, in accordance with an instruction of central controller 90, AC circuit breaker 12 is opened, and discharge switch 32 is in ON state. Each submodule 7 of power conversion circuit 2 is stopped, that is, switching elements 22A, 22B are in OFF state. For the sake of simplicity of illustration, a discharge path in U-phase leg circuit 4u will be representatively described.

Controller 50 receives a discharge start command for discharging capacitor 24 of each submodule 7 from central controller 90. In accordance with the discharge start command, controller 50 operates N number of submodules 7 such that capacitors 24 of these submodules 7 are discharged.

Specifically, controller 50 selects N number of submodules 7 from among submodules 7 included in leg circuit 4u. In the example of Fig. 5, N number of submodules 7 are selected for the entire leg circuit 4u by selecting Na number of submodules 7 from each of upper arm 5 and lower arm 6, where N = 2Na.

Controller 50 drives switching circuits 20 of N number of submodules 7 such that capacitors 24 of these submodules 7 are discharged. Specifically, controller 50 turns on switching elements 22A and turns off switching elements 22B among N number of submodules 7. In the example of Fig. 5, switching elements 22A of Na number of submodules 7 in each of upper arm 5 and lower arm 6 are in ON state. In this case, electric charges of capacitors 24 flow through switching elements 22A in N number of submodules 7. The voltage output from each of N number of submodules 7 is the cell capacitor voltage.

In contrast, switching elements 22A, 22B are left OFF in 2Nb number of unselected submodules 7. In 2Nb number of submodules 7, thus, electric charges flowing out of N number of submodules 7 flow via diodes 23B. The voltage output from each of 2Nb number of submodules 7 is zero voltage.

Thus, the electric charges of respective capacitors 24 of N number of submodules 7 are discharged to ground via discharge circuit 30 which is an external facility to power converter 100, as indicated by the arrow of Fig. 5. The discharge current caused by the electric discharges of capacitor 24 flows through a path in order of lower arm 6, upper arm 5, discharge circuit 30P, and ground.

Description has been given of the configuration in which N number of submodules 7 are selected for the entire leg circuit 4u by selecting Na number of submodules 7 from each of upper arm 5 and lower arm 6 in the example of Fig. 5, but the present disclosure is not limited thereto. For example, controller 50 may select N number of submodules 7 only from upper arm 5 or select N number of submodules 7 only from lower arm 6. In other words, it suffices that controller 50 is configured to select N number of submodules 7 from among submodules 7 included in leg circuit 4u.

Also in leg circuits 4v, 4w as in leg circuit 4u, N number of submodules 7 are selected, and capacitors 24 of the respective selected submodules 7 are discharged.

Description will now be given of a mode of setting the number of (i.e., N number of) submodules 7 that are operated to discharge capacitors 24 of submodules 7 included in leg circuit 4u.

When capacitors 24 are discharged, an output voltage Vu of leg circuit 4u is the sum of output voltages of respective submodules 7 included in leg circuit 4u. As described above, the output voltage of submodule 7 that is operated is the cell capacitor voltage, and the output voltage of submodule 7 that is not operated is zero voltage. Output voltage Vu thus corresponds to the sum of output voltages of submodules 7 that are operated.

If output voltage Vu is excessively large, devices such as power conversion circuit 2 and reactors 18P, 18N provided in DC line 14 are damaged. It is thus necessary to set the number of submodules 7 to be operated such that output voltage Vu is less than a threshold Vth, in consideration of the insulation designs of these devices.

When output voltage Vu is less than a line voltage (hereinbelow also referred to as "DC line voltage") of DC line 14, a current flows from DC line 14 into the power conversion circuit 2 side. In the case where the element in submodule 7 can possibly be damaged as a current flows in, it is preferable to set the number of submodules 7 to be operated such that output voltage Vu is not less than a DC line voltage Vdc, where DC line voltage Vdc is less than threshold Vth.

DC line voltage Vdc is calculated by subtracting DC voltage value Vdcn of low-potential-side DC terminal Nn, which is detected by DC voltage detector 11B, from DC voltage value Vdcp of high-potential-side DC terminal Np, which is detected by DC voltage detector 11A (i.e., Vdc = Vdcp - Vdcn). Note that DC line voltage Vdc is generally known unless system conditions are changed. For this reason, a known DC line voltage Vdc pre-stored in ROM 73, RAM74, or the like may be used.

For example, controller 50 sets N, which is the number of submodules 7 to be operated, such that output voltage Vu of leg circuit 4u is not less than DC line voltage Vdc and less than threshold Vth, as described above.

Description will now be given of the process of controller 50 after operating N number of first selected submodules 7.

When discharge of respective capacitors 24 of N number of first selected submodules 7 is started, output voltage Vu gradually decreases. It is thus preferable that controller 50 add submodule 7 to be operated as required from among unselected submodules 7 (e.g., 2Nb number of submodules 7) so as to satisfy the condition that output voltage Vu is not less than DC line voltage Vdc and less than threshold Vth.

Since control circuit 200 of each submodule 7 generates power for control using the voltage (i.e., cell capacitor voltage) of capacitor 24, control circuit 200 can no longer operate when capacitor 24 is discharged to decrease the cell capacitor voltage. Submodule 7 thus fails to communicate with controller 50 and control switching elements 22A, 22B. This brings switching elements 22A, 22B to OFF state, and accordingly, electric charges flow through diode 23B in submodule 7 which cannot communicate with controller 50.

Controller 50 discharges capacitors 24 of respective submodules 7 of leg circuit 4u by adding submodule 7 to be operated as required so as to discharge capacitor 24. Once controller 50 is unable to communicate with submodule 7, electric charges remaining in capacitor 24 of this submodule 7 are self-discharged by resistor 29.

When damage to the element of submodule 7, which is caused by a current flowing from DC line 14 into the power conversion circuit 2 side, needs not to be taken into consideration, a configuration may be made such that N number of new submodules 7 are operated after communications with N number of first selected submodules 7 are disabled, not such that submodule 7 to be operated is added as required.

Another example of the mode of discharging capacitors 24 will be described. Specifically, controller 50 alternately operates a submodule group including N number of submodules 7 and another submodule group including N number of other submodules 7 for each certain period of time, thereby discharging capacitors 24 in the respective submodule groups.

Herein, for the sake of simplicity of explanation, leg circuit 4u includes 2N number of submodules 7. A first submodule group includes N number of submodules 7, and a second submodule group includes N number of other submodules 7.

In this case, controller 50 first turns on switching elements 22A and turns off switching elements 22B among respective submodules 7 included in the first submodule group. At this time, switching elements 22A, 22B of respective submodules 7 included in the second submodule group are in OFF state. Capacitors 24 included in the first submodule group are thus discharged.

Controller 50 then turns off switching elements 22A, 22B of respective submodules 7 included in the first submodule group, and turns on switching elements 22A and turns off switching elements 22B among respective submodules 7 included in the second submodule group. Capacitors 24 included in the second submodule group are thus discharged.

Controller 50 alternately drives (i.e., turns on) switching elements 22A of respective submodules 7 included in the first submodule group and switching elements 22A of respective submodules 7 included in the second submodule group periodically at regular intervals. Consequently, discharge of capacitors 24 included in the first submodule group and discharge of capacitors 24 included in the second submodule group are alternately performed.

With the above configuration, the switching elements of respective submodules 7 are switched frequently, and discharge of capacitors 24 is thus facilitated owing to a switching loss, resulting in a shorter discharge time.

The above also applies to a case in which submodules 7 of leg circuit 4u are divided into three or more submodule groups. Specifically, switching elements included in each submodule group are alternately driven in any order.

### <Procedure>

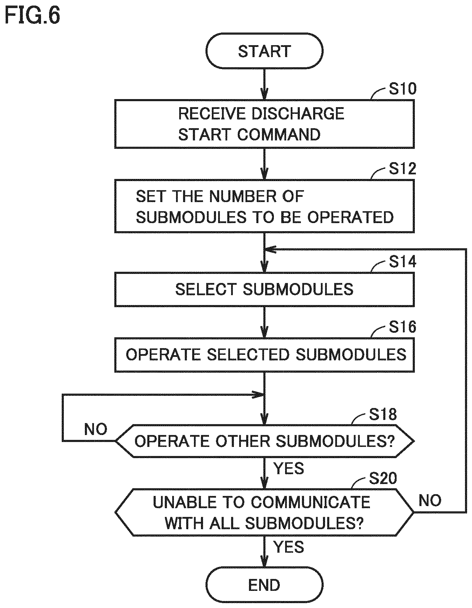

Fig. 6 is a diagram for illustrating an example procedure of controller 50 according to Embodiment 1. The following steps are typically executed by arithmetic processing unit 70 of controller 50. Controller 50 constantly monitors an output voltage of leg circuit 4 based on signals 17 received from respective submodules 7.

Referring to Fig. 6, controller 50 receives a discharge start command for discharging capacitor 24 from central controller 90 (step S10). Herein, central controller 90 opens AC circuit breaker 12 and closes discharge switch 32 of discharge circuit 30, and then, transmits the discharge start command to controller 50. At the time when the discharge start command is received, thus, AC circuit breaker 12 is opened, and discharge switch 32 of discharge circuit 30 is closed. The discharge start command is typically transmitted to controller 50 in maintenance service of power conversion circuit 2.

Upon receipt of the discharge start command, controller 50 sets a number N of submodules 7 to be operated to discharge capacitors 24 (step S12). For example, controller 50 sets a number N of submodules 7 to be operated such that the sum of output voltages of respective submodules 7 is less than threshold Vth.

Controller 50 selects N number of submodules 7 from among submodules 7 included in leg circuit 4 (step S14). Specifically, for each of leg circuits 4u to 4w, controller 50 selects N number of submodules 7 from among submodules 7 included in the relevant leg circuit.

Controller 50 operates submodules 7 such that capacitors 24 in the respective selected submodules 7 are discharged (step S16). Specifically, controller 50 turns on switching elements 22A and turns off switching elements 22B among the respective selected submodules 7, thereby discharging capacitors 24 of respective submodules 7 via discharge circuit 30.

Controller 50 determines whether to operate submodules 7 other than N number of submodules 7 selected at step S12 (step S18). In an aspect, controller 50 determines to operate other submodules 7 when controller 50 is unable to communicate with N number of submodules 7 selected at step S14. In another aspect, controller 50 determines to operate other submodules 7 when a certain period of time has elapsed since N number of submodules 7 were operated at step S16.

When other submodules 7 are not operated (NO at step S18), controller 50 repeats the process of step S18. When other submodules 7 are operated (YES at step S18), controller 50 determines whether controller 50 is unable to communicate with all submodules 7 included in leg circuit 4 (step S20).

When controller 50 is unable to communicate with all submodules 7 (YES at step S20), controller 50 ends the process. In this case, self-discharge of capacitor 24 is performed by resistor 29 in each submodule 7. Otherwise (NO at step S20), controller 50 returns to step S14 to select N number of submodules 7 different from those selected the last time and operate N number of selected submodules 7 at step S16.

As described above, controller 50 repeatedly executes the processes of steps S14 to S18 until controller 50 is unable to communicate with all submodules 7, thereby discharging capacitors 24.

Although a configuration in which submodule 7 to be operated is added as required is not mentioned in the above flowchart, controller 50 executes the following process when such a configuration is adopted. For example, the case of leg circuit 4u will be described.

After executing the processes of step S10 to S16, controller 50 determines whether output voltage Vu is less than a threshold Vdcx which is greater than DC line voltage Vdc by a certain value. The certain value is a margin for preventing output voltage Vu from falling below DC line voltage Vdc. When controller 50 determines that output voltage Vu is less than threshold Vdcx, controller 50 further operates other submodules 7 such that output voltage Vu is not less than threshold Vdcx and less than threshold Vth, where Vdc < Vdcx < Vth.

As described above, controller 50 adds submodule 7 as required until controller 50 is unable to communicate with all submodules 7 while satisfying the condition that output voltage Vu is not less than threshold Vdcx and less than threshold Vth, thereby discharging capacitors 24.

### <Functional Configuration>

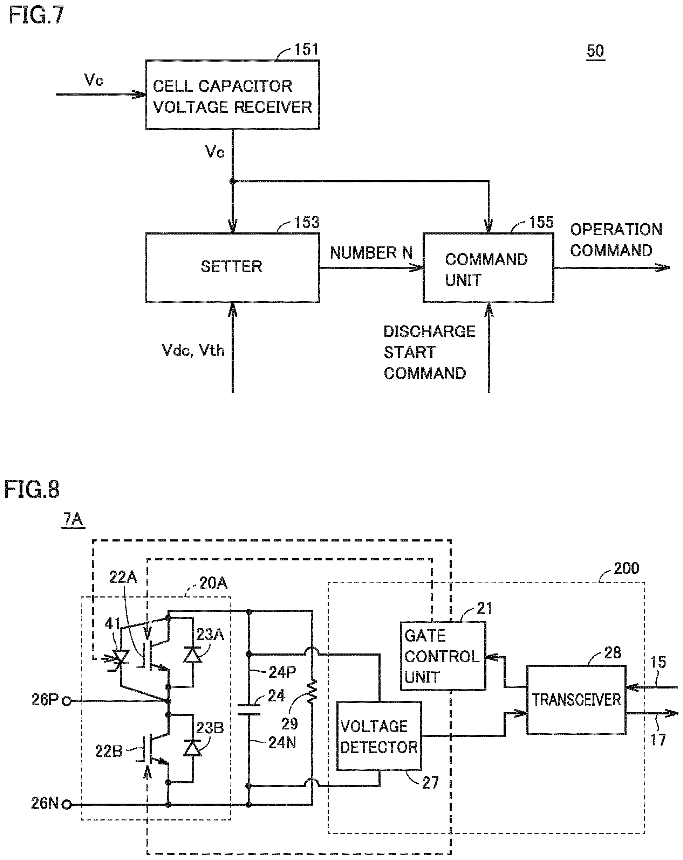

Fig. 7 is a schematic diagram showing a functional configuration of controller 50 according to Embodiment 1. Referring to Fig. 7, controller 50 includes a cell capacitor voltage receiver 151, a setter 153, and a command unit 155. These functions are typically implemented by CPU 72 of arithmetic processing unit 70 executing the program stored in ROM 73. Note that some or all of these functions may be configured to be implemented with the use of a dedicated circuit.

Cell capacitor voltage receiver 151 receives, from each submodule 7, a signal 17 indicating a cell capacitor voltage of capacitor 24 provided in the submodule.

Setter 153 calculates the sum of output voltages of respective submodules 7 included in leg circuit 4 (i.e., an output voltage of leg circuit 4) based on signals 17 received from respective submodules 7. In an aspect, setter 153 sets a number N of submodules 7 to be operated to discharge capacitors 24 from among submodules 7 included in leg circuit 4 such that an output voltage of leg circuit 4 is less than threshold Vth. In another aspect, setter 153 sets the number N such that an output voltage of the leg circuit is less than threshold Vth and not less than DC line voltage Vdc.

Command unit 155 selects at least one (e.g., N number of) submodule 7 from among submodules 7 included in leg circuit 4. Upon receipt of the discharge start command from central controller 90, command unit 155 drives switching circuits 20 of N number of submodules 7 such that capacitors 24 of N number of submodules 7 are discharged via discharge circuit 30. Specifically, command unit 155 transmits operation command 15 to N number of submodules 7 for this driving.

In an aspect, when controller 50 is unable to communicate with N number of submodules 7, command unit 155 selects N number of other submodules 7 and drives switching circuits 20 of N number of other submodules 7 such that capacitors 24 of N number of other submodules 7 are discharged. For example, command unit 155 determines that controller 50 is unable to communicate with submodule 7 when command unit 155 no longer receives a cell capacitor voltage from this submodule 7.

In another aspect, command unit 155 alternately operates N number of submodules 7 and N number of other submodules 7. Specifically, command unit 155 alternately and periodically drives switching elements 22A of N number of submodules 7 and switching elements 22A of N number of other submodules 7. Consequently, capacitors 24 of each of N number of submodules 7 and N number of other submodules 7 are discharged via discharge circuit 30.

In still another aspect, command unit 155 adds submodule 7 to be operated as required such that the output voltage of leg circuit 4 is not less than threshold Vdcx and less than threshold Vth, and operates the added submodule 7.

### <Advantageous Effects>

Embodiment 1 can efficiently discharge a capacitor of a submodule even when the submodule is an existing submodule including no discharge mechanism. Since no discharge mechanism needs to be provided in the submodule, the size of the submodule will not increase.

### Embodiment 2

Embodiment 1 has described a configuration in which electric charges of capacitor 24 are self-discharged after controller 50 is unable to communicate with submodule 7. Embodiment 2 will describe a configuration in which electric charges of capacitor 24 are discharged via discharge circuit 30 using a thyristor even when controller 50 is unable to communicate with each submodule 7.

Embodiment 2 is different from Embodiment 1 in that a thyristor is provided in a submodule. The overall configuration of Embodiment 2, the configuration of power conversion circuit 2, and the hardware configuration of controller 50 are similar to the configurations of Embodiment 1.

Fig. 8 is a circuit diagram showing an example submodule according to Embodiment 2. Referring to Fig. 8, a submodule 7A is obtained by replacing switching circuit 20 of submodule 7 shown in Fig. 3 with a switching circuit 20A. Switching circuit 20A is obtained by connecting thyristor 41 in parallel with switching element 22A in switching circuit 20.

Switching control of thyristor 41 is performed by gate control unit 21. The other configuration of submodule 7A is similar to the configuration of submodule 7 shown in Fig. 3, which will not be described repeatedly in detail.

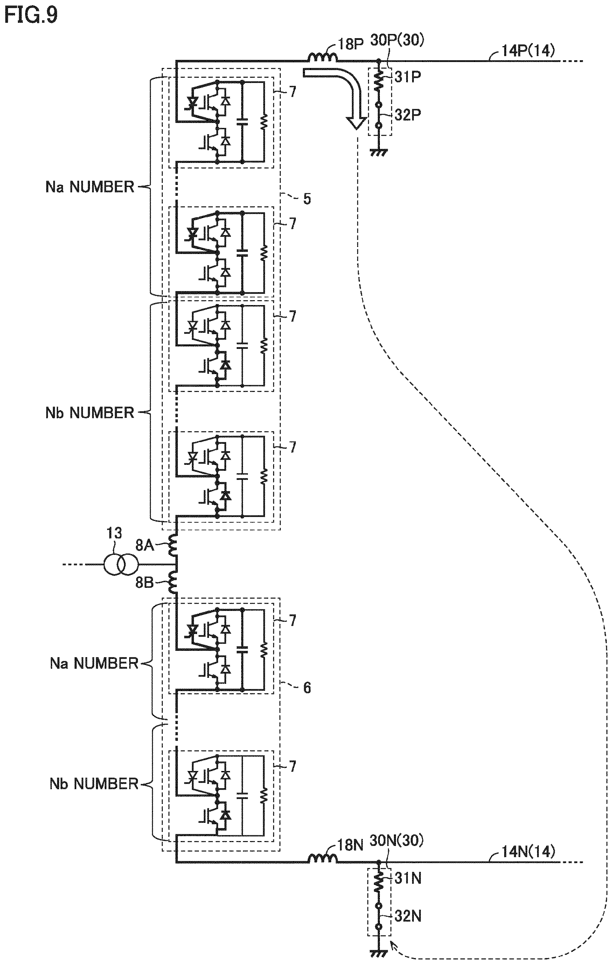

Fig. 9 is a diagram for illustrating a discharge path of capacitor 24 according to Embodiment 2. As in Fig. 5, submodules 7A of power conversion circuit 2 are stopped, AC circuit breaker 12 is opened, and discharge switch 32 is in ON state. For the sake of simplicity of explanation, a discharge path in U-phase leg circuit 4u will be representatively described.

Referring to Fig. 9, controller 50 operates N number of submodules 7A such that capacitors 24 of respective submodules 7A are discharged in accordance with a discharge start command from central controller 90. In the example of Fig. 9, N number of submodules 7A are selected for the entire leg circuit 4u by selecting Na number of submodules 7A from each of upper arm 5 and lower arm 6.

Controller 50 drives switching circuits 20A of N number of submodules 7A such that capacitors 24 of respective submodules 7A are discharged. Specifically, controller 50 turns on thyristors 41 and turns off switching elements 22A, 22B among N number of submodules 7A. In this case, electric charges of capacitors 24 flow via thyristors 41 in N number of submodules 7A.

In contrast, in 2Nb number of unselected submodules 7A, thyristor 41 and switching elements 22A, 22B are left OFF, and accordingly, electric discharges flow via diodes 23B. Consequently, electric charges of respective capacitors 24 of N number of submodules 7A are discharged to ground via discharge circuit 30 which is an external facility to power converter 100, as indicated by the arrow of Fig. 9.

In Embodiment 2, thyristor 41 is turned on in submodule 7A in which capacitor 24 is discharged, as described above.

Thyristor 41 is a switching element which is conducted (i.e., turned on) between an anode and a cathode thereof as a gate current flows therethrough, and allows a current to flow only in one direction during turn-on. Once thyristor 41 is turned on, thyristor 41 is left ON until the current between the anode and cathode falls to zero even when the gate current falls to zero.

In Embodiment 1, when capacitor 24 of submodule 7 is discharged to decrease the cell capacitor voltage, submodule 7 is unable to communicate with controller 50, and accordingly, electric charges remaining in capacitor 24 of submodule 7 are self-discharged by resistor 29.

In Embodiment 2, however, once thyristor 41 is turned on, thyristor 41 maintains ON state even when submodule 7A is unable to communicate with controller 50, as long as capacitor 24 is discharged (i.e., as long as a discharge current flows). Even after submodule 7A is unable to communicate with controller 50, thus, capacitor 24 can be discharged via discharge circuit 30.

Contrastingly, thyristor 41 cannot be controlled to OFF state once it enters ON state. For this reason, controller 50 further drives thyristors 41 of other submodules 7A such that output voltage Vu of leg circuit 4u is less than threshold Vth after discharge of capacitors 24 of N number of first submodules 7A is started, thereby starting discharge of capacitors 24 of the other submodules 7A.

Controller 50 may further drive thyristors 41 of other submodules 7A such that output voltage Vu of leg circuit 4u is less than threshold Vth and not less than DC line voltage Vdc after discharge of capacitors 24 of N number of first submodules 7A is started, thereby starting discharge of capacitors 24 of the other submodules 7A.

In Embodiment 2, controller 50 adds submodule 7A to be operated to discharge capacitor 24 as required, thereby discharging capacitors 24 of respective submodules 7A of leg circuit 4u, as described above. Even after controller 50 is unable to communicate with submodule 7A, electric charges remaining in capacitor 24 of this submodule 7A are discharged via discharge circuit 30.

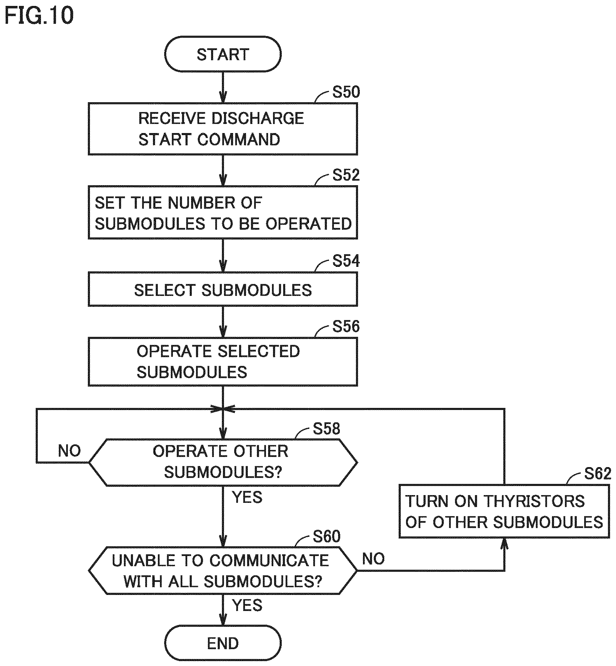

Fig. 10 is a diagram for illustrating an example procedure of controller 50 according to Embodiment 2. Referring to Fig. 10, the processes of steps S50 to S54 are respectively similar to the processes of steps S10 to S14 shown in Fig. 6, which will not be described repeatedly in detail.

Controller 50 operates selected submodules 7A such that capacitors 24 of these submodules 7A are discharged (step S56). Specifically, controller 50 turns on thyristors 41 and turns off switching elements 22A, 22B among the respective selected submodules 7A, thereby discharging capacitors 24 of these submodules 7A via discharge circuit 30.

Controller 50 determines whether to operate submodules 7 other than N number of submodules 7A selected at step S52 (step S58). Specifically, controller 50 determines to operate other submodules 7 when the output voltage of leg circuit 4 is less than threshold Vdcx which is greater than DC line voltage Vdc by a certain value.

When other submodules 7A are not operated (NO at step S58), controller 50 repeats the process of step S58. When other submodules 7A are operated (YES at step S58), controller 50 determines whether controller 50 is unable to communicate with all submodules 7A included in leg circuit 4 (step S60).

When controller 50 is unable to communicate with all submodules 7A (YES at step S60), controller 50 ends the process. Also in this case, a discharge current flows into discharge circuit 30 through thyristors 41 of respective submodules 7A, and accordingly, discharge of capacitors 24 is continuously performed with efficiency. Otherwise (NO at step S60), controller 50 turns on thyristors 41 of other submodules 7A with which controller 50 can communicate (step S62), and performs the process of step S58. At step S58, controller 50 determines whether to operate other submodules 7A different from the last ones.

As described above, controller 50 repeatedly executes the processes of steps S58, S62 until controller 50 is unable to communicate with all submodules 7A, thereby discharging capacitors 24.

### <Functional Configuration>

Controller 50 according to Embodiment 2 includes cell capacitor voltage receiver 151, setter 153, and command unit 155 as in the functional configuration shown in Fig. 7. Cell capacitor voltage receiver 151 and setter 153 of Embodiment 2 are similar to those of the configuration of Embodiment 1. The function of command unit 155 according to Embodiment 2 will now be described.

Command unit 155 selects at least one (e.g., N number of) submodule 7A from among submodules 7A included in respective leg circuits 4. Upon receipt of a discharge start command from central controller 90, command unit 155 drives switching circuits 20A of N number of submodules 7A such that capacitor 24 of at least one submodule 7A is discharged via discharge circuit 30. Specifically, command unit 155 drives (i.e., turns on) thyristors 41 of N number of submodules 7A. Command unit 155 transmits operation command 15 to at least one submodule 7A for such driving.

In an aspect, command unit 155 further drives thyristors 41 of one or more other submodules 7A such that the sum of output voltages of respective submodules 7A included in leg circuit 4 (i.e., an output voltage of leg circuit 4) is less than threshold Vth after discharge of capacitor 24 of at least one submodule 7A is started. Consequently, capacitors 24 of one or more other submodules 7A are discharged via discharge circuit 30.

In another aspect, command unit 155 further drives thyristors 41 of one or more other submodules 7A such that the sum of output voltages of respective submodules 7A included in leg circuit 4 is less than threshold Vth and not less than DC line voltage Vdc after discharge of capacitor 24 of at least one submodule 7A is started. Consequently, capacitors 24 of one or more other submodules 7A are discharged via discharge circuit 39.

### <Advantageous Effects>

In Embodiment 2, a capacitor is discharged via an external discharge circuit even after a controller is unable to communicate with a submodule, resulting in a shorter discharge time. In Embodiment 2, also, a discharge circuit having an optimized resistance or the like needs not to be separately provided in a submodule, and it suffices that a thyristor is added in the submodule. Embodiment 2 can thus be implemented relatively easily by making the most of an existing facility.

### Other Embodiments

Each of the configurations illustrated as the embodiments described above is an example of the configuration of the present disclosure, and it can be combined with another known technique, or can be modified, for example partially omitted, within the scope not departing from the gist of the present disclosure. Further, in each embodiment described above, the process or the configuration described in another embodiment may be employed and implemented as appropriate.

It should be understood that the embodiments disclosed herein are illustrative and non-restrictive in every respect. The scope of the present disclosure is defined by the scope of the claims, rather than the description above, and is intended to include any modifications within the scope and meaning equivalent to the scope of the claims.

### REFERENCE SIGNS LIST

2 power conversion circuit; 4u, 4v, 4w leg circuit; 5 upper arm; 6 lower arm; 7, 7A submodule; 8A, 8B reactor; 9A, 9B arm current detector; 10 AC voltage detector; 11A, 11B DC voltage detector; 12 AC circuit breaker; 13 transformer; 14 DC line; 14N, 14P DC power transmission line; 15, 15nu, 15nv, 15nw, 15pu, 15pv, 15pw operation command; 16 AC current detector; 17 signal; 20, 20A switching circuit; 21 gate control unit; 22A, 22B switching element; 23A, 23B diode; 24 capacitor; 24N, 24P opposite end; 26N, 26P input-output terminal; 27 voltage detector; 28 transceiver; 29 resistor; 30N, 30P discharge circuit; 31N, 31P discharge resistor; 32N, 32P discharge switch; 41 thyristor; 50 controller; 51 auxiliary transformer; 52 AD converter unit; 70 arithmetic processing unit; 71 bus; 72 CPU; 73 ROM; 74 RAM; 75 DI circuit; 76 DO circuit; 77 input interface; 78 communication interface; 80 AC system; 90 central controller; 100 power converter; 151 cell capacitor voltage receiver; 153 setter; 155 command unit; 200 control circuit.

## Claims

1. A power converter that performs power conversion between a DC line and an AC system, the power converter comprising:
a power conversion circuit including a plurality of submodules connected in series with each other; and
a controller to control each of the plurality of submodules, wherein
each of the plurality of submodules includes a switching circuit and a capacitor connected in parallel with the switching circuit, and
when a circuit breaker provided between the AC system and the power conversion circuit is opened, the controller drives the switching circuit of at least one submodule of the plurality of submodules such that the capacitor of the at least one submodule is discharged via a discharge circuit connected to the DC line.

2. The power converter according to claim 1, wherein the controller sets a number of the at least one submodule such that a sum of output voltages of the respective submodules is less than a threshold.

3. The power converter according to claim 1, wherein the controller sets a number of the at least one submodule such that a sum of output voltages of the respective submodules is less than a threshold and is not less than a line voltage of the DC line, the line voltage being smaller than the threshold.

4. The power converter according to claim 2 or 3, wherein the controller alternately drives the switching circuit of the at least one submodule and the switching circuit of as many other submodule as the at least one submodule, to thereby discharge the capacitor of each of the at least one submodule and the other submodule.

5. The power converter according to any one of claims 1 to 3, wherein
the switching circuit includes a switching element and a thyristor connected in parallel with the switching element, and
the controller drives the thyristor of the at least one submodule to discharge the capacitor of the at least one submodule via the discharge circuit.

6. The power converter according to claim 5, wherein after discharge of the capacitor of the at least one submodule is started, the controller further drives the thyristors of one or more other submodules such that a sum of output voltages of the respective submodules is less than a threshold, to thereby discharge the capacitors of the one or more other submodules via the discharge circuit.

7. The power converter according to claim 5, wherein after discharge of the capacitor of the at least one submodule is started, the controller further drives the thyristors of one or more other submodules such that a sum of output voltages of the respective submodules is less than a threshold and is not less than a line voltage of the DC line, to thereby discharge the capacitors of the one or more other submodules via the discharge circuit, the line voltage being smaller than the threshold.

8. A power conversion system that performs power conversion between a DC line and an AC system, the power conversion system comprising:
a power converter; and
a discharge circuit connected to the DC line, wherein
the power converter includes
a power conversion circuit including a plurality of submodules connected in series with each other, and
a controller to control each of the plurality of submodules,
each of the plurality of submodules includes a switching circuit and a capacitor connected in parallel with the switching circuit, and
when a circuit breaker provided between the AC system and the power conversion circuit is opened, the controller drives the switching circuit of at least one submodule of the plurality of submodules such that the capacitor of the at least one submodule is discharged via the discharge circuit connected to the DC line.
